# EUROPÄISCHE PATENTSCHRIFT

(11) **EP 1 474 944 B1**
(45) Veröffentlichungstag und Bekanntmachung des Hinweises auf die Patenterteilung: **11.05.2005**
(21) Anmeldenummer: 02757952.3
(22) Anmeldetag: 26.07.2002
(51) Int. Cl.: H04Q 7/38, G01S 5/02, H04Q 7/34

(54) **VERFAHREN UND SYSTEM ZUR POSITIONSERMITTLUNG**
METHOD AND SYSTEM FOR DETERMINING POSITION
PROCEDE ET SYSTEME POUR DETERMINER UNE POSITION

(30) Priorität: 26.07.2001 AT 11742001
(43) Veröffentlichungstag der Anmeldung: 10.11.2004
(73) Patentinhaber: Siemens AG Österreich, 1210 Wien (AT)
(72) Erfinder: RENNER, Alexander, A-1120 Wien (AT); SCHILD, Raoul, A-1040 Wien (AT)
(74) Vertreter: Patentanwaltskanzlei Matschnig
(86) Internationale Anmeldenummer: PCT/AT2002/000224
(87) Internationale Veröffentlichungsnummer: WO 2003/010988

(56) Entgegenhaltungen:
- WO-A-99/63358
- US-A- 4 445 118

## Beschreibung

Die Erfindung betrifft ein Verfahren zur Positionsermittlung eines mobilen Gerätes, welches zumindest eine Funksignal-Empfangseinrichtung aufweist, mittels welcher verschiedene Funkkanäle empfangbar sind, welche von ortsfesten Sendeeinrichtungen über eine Punktzu-Mehrpunkt-Verbindung ausgesendet werden, wobei a) an Hand der von der Empfangseinrichtung empfangenen Funkkanäle zumindest ein Kanalmuster ermittelt wird, b) das zumindest eine Kanalmuster mit vorgegebenen Referenzmustern verglichen wird, und c) durch Auswerten dieses Vergleichs auf die momentane Position der Funksignal-Empfangseinrichtung geschlossen wird.

Weiters betrifft die Erfindung ein Mobiles Gerät, welches dazu eingerichtet ist, mittels zumindest einer Funkempfangseinrichtung Funksignale von einer Anzahl ortsfester, verteilt angeordneter Funk-Sendeeinrichtungen, welche auf zumindest je einem Funkkanal aus einer vorgegebenen Anzahl von Funkkanälen Funksignale über eine Punkt-zu-Mehrpunkt-Verbindung aussenden, zu empfangen.

Die Positionsermittlung von Personen und Fahrzeugen ist aus verschiedenen Gründen von besonderem Interesse. Beispielsweise ist eine Ortung von Fahrzeugen bei modernen Mautsystemen notwendig, um festzustellen, ob sich ein Fahrzeug in einem mautpflichtigen Bereich befindet.

Eine weitverbreitete, moderne Methode zur Positionsermittlung besteht in der Verwendung des sogenannten "Global Positioning Systems" (GFS), bei welchem mittels Satelliten die Position eines GPS-Empfängers mit einer im Meterbereich liegenden Genauigkeit ermitteln

Diese Methode eignet sich für die meisten Positionsermittlungen in ausreichender Weise. Nachteile bestehen nur dann, wenn keine direkte Sichtverbindung zu den zur Positionsermittlung notwendigen Satelliten besteht. Allerdings besteht beispielsweise bei der oben erwähnten Anwendung im Zusammenhang mit Mautsystemen der Nachteil, dass die GPS-Signale störbar sind. Bei solchen Systemen, bei denen ein Straßenbenutzer definitionsgemäß für die Benutzung bestimmter Straßen(abschnitte) bezahlen muss, ist es zwecks Rechtssicherheit notwendig, dass zuverlässig feststellbar ist, ob sich ein Benutzer mit seinem Fahrzeug in einem mautpflichtigen Bereich befindet oder diesen verlassen hat. Bei - illegalen - Störversuchen tritt aber nicht nur eine Störung im Bereich des Störenden, sondern auch in einem bestimmten Bereich um diesen auf, mit entsprechenden Einnahmeverlusten für den Mautsystem-Betreiber.

Es existieren auch andere Methoden der Positionsermittlung, beispielsweise unter Verwendung von Funksignalen, bei denen etwa an Hand der Signallaufzeit, Feldstärkemessungen, etc. verschiedener Funksignale die Position einer Funkeinrichtung ermittelt werden kann. In den meisten Fällen weisen diese allerdings nicht die Genauigkeit und Einfachheit wie bei GPS auf, und es bestehen weiterhin die oben in Zusammenhang mit dem Mautsystem angeführten Nachteile.

Ein eingangs erwähntes Verfahren ist auch aus der EP 0.631 453 A2 bekannt. Bei diesem Verfahren werden von einem mobilen Gerät gesammelte Daten, wie Feldstärke von Funkkanälen, Zellinformationen etc. die von ortsfesten Sendeeinrichtungen ausgesendet werden, an eine ferne Zentrale übermittelt, wo Kanalmuster ermittelt und mit Referenzmustem verglichen werden. Auf diese Weise kann in der Zentrale die Position des mobilen Gerätes bestimmt werden. Zur Übermittlung der Funksignal-Daten von dam mobilen Gerät an die Zentrale ist eine Verbindung zwischen dem mobilen Gerät und der Zentrale notwendig, während dieser Verbindung werden die Daten in bestimmten Zeitintervallen an die Zentrale übermittelt.

Es ist eine Aufgabe der Erfindung, die Positionsermittlung anzugeben, welche auf einfachere Weise und kostengünstiger zu realisieren ist.

Insbesondere ist es auch noch eine Aufgabe der Erfindung, eine solche Positionsermittlung für Mautsysteme anzugeben.

Diese Aufgaben werden mit einem eingangs erwähnten Verfahren dadurch gelöst, dass erfindungsgemäß die Schritte a) - c) in dem mobilen Gerät durchgeführt werden.

Die Erfindung basiert auf dem Gedanken, an Hand von bestehenden oder zusätzlich noch neu zu errichtenden Funksendeeinrichtungen auf einfache Weise den momentanen Aufenthaltsort einer Funkempfangseinrichtung zu ermitteln, und somit ist auch die Ortung eines Fahrzeuges oder einer Person, die eine solche Empfangseinrichtung mit sich führt, auf einfache Weise möglich.

Je nach Aufenthaltsort der Empfangseinrichtung unterscheiden sich die empfangbaren Funkkanäle, sodass aus an Hand eines aus diesen Informationen gebildeten "Kanalmusters" Rückschlüsse auf die aktuelle Position getätigt werden können, in dem das momentan ermittelte Kanalmuster mit vorab ermittelten Referenzmustern verglichen wird.

Bei der Erfindung ist es nicht mehr notwendig, eine Verbindung zu einer Zentrale aufzubauen, wodurch die Positionsermittlung einfacher und kostengünstiger zu realisieren ist, da die Musterermittlung und der Vergleich unmittelbar und unabhängig von anderen Einrichtungen wie einer Zentrale von dem mobilen Gerät durchgeführt werden können.

Auf einfache Weise lässt sich die Genauigkeit des erfindungsgemäßen Verfahrens wesentlich erhöhen, wenn zur Positionsermittlung zusätzlich zeitlich vorher ermittelte Kanalmuster verwendet werden. Grundsätzlich ist es möglich, dass verschiedenen geografische Bereiche ähnliche Kanalmuster aufweisen, sodass eine eindeutige Zuordnung eines aktuell ermittelten Musters zu einem Referenzmuster nicht möglich ist. Durch die Verwendung einer "Muster-Historie", d. h. durch die Einbeziehung von einem oder besser noch mehreren zeitlich vorher ermittelten Kanalmustem wird allerdings die eindeutige Zuordnung wesentlich vereinfacht, da eine große Anzahl von Bereichen auf Grund der "Vergangenheit" des Empfängers von Vorneherein ausgeschlossen werden können.

Einfach und zuverlässig ist es, wenn das Kanalmuster aus den Kanalkennungen der empfangenen Funkkanäle gebildet wird. Aus dem Wissen heraus, dass in bestimmten Regionen nur bestimmte Funkkanäle empfangbar sind, kann auf diese Weise bereits relativ genau und mit geringem Aufwand eine Positionsermittlung erfolgen.

Hinsichtlich der Ortungsgenauigkeit wesentlich verbessern lässt sich das erfindungsgemäße Verfahren, wenn ein Kanalmuster aus der Reihung der empfangenen Kanäle nach Empfangsstärke gebildet wird. Bei einem Fortbewegen des Funkempfängers bleiben - natürlich in Abhängigkeit von der Senderanordnung - die empfangenen Funkkanäle über einen bestimmten Zeitraum unverändert, sodass sich auch die jeweils ermittelte Kanalmusterkennung nicht ändert. Damit auch in solchen Situationen eine noch genauere Ortung möglich ist und die Ortungsgenauigkeit nicht auf das Wegfallen und/oder Hinzukommen eines empfangenen bzw. neuen Kanals eingeschränkt ist, wird als zusätzliches Kriterium für die Kanalmusterbildung noch die relative Empfangsstärke der empfangenen Kanäle zueinander hinzugenvmmen. Eine Musteränderung tritt dann bereits auf, wenn zwar die empfangenen Kanäle gleich bleiben, sich aber die Reihung der Kanäle ändert.

Schließlich lässt sich die Positionsermittlung hinsichtlich ihrer Genauigkeit nochmals steigem, wenn zur Musterermittlung nicht nur eine Reihung der empfangenen Kanäle hinsichtlich ihrer Empfangsstärke verwendet wird, sondern wenn zur Ermittlung eines Kanalmusters zusätzlich weiters noch die genaue Empfangsstärke herangezogen wird. Solange sich bei einem Fortbewegen zwar die Empfangsstärke einzelner Kanäle ändert, die Reihung der Kanäle an sich aber unverändert bleibt, wäre ohne diesen zusätzlichen Punkt eine genauere Ortung nicht möglich. So kann aber bereits aus der Veränderung der Feldstärke - ohne Änderung der Reihung der Funkkanäle - eine Positionsveränderung ermittelt und so die Genauigkeit des Verfahrens erhöht werden.

An dieser Stelle ist anzumerken, dass die Genauigkeit der Feldstärkemessung durch verschiedenste Einflüsse, etwa durch Reflexionen, Brechung, etc. oftmals nur sehr begrenzt ist. Für eine Reihung der Funkkanäle ist die Genauigkeit dabei in der Regel völlig ausreichend, die Ungenauigkeiten sollten allerdings dann, wenn die Feldstärken mit ihren tatsächlichen Werten in eine Musterermittlung eingehen, berücksichtigt werden.

Besonders einfach und mit bestehender Infrastruktur lässt sich das erfindungsgemäße Verfahren realisieren, wenn zur Musterermittlung Broadcast-Funkkanäle verwendet werden, welche beispielsweise in GSM-Funknetzen oder UKW-Rundfunknetzen verwendet werden.

Zweckmäßigerweise werden zur Musterermittlung die Funkkanäle eines zellularen Funknetzes verwendet, und die Kennung der jeweiligen Aufenthaltszelle des Funkempfängers wird zur Musterermittlung verwendet Besonders vorteilhaft, weil weit verbreitet ist es, wenn in diesem Zusammenhang GSM-Broadcast-Kanäle verwendet werden.

Durch die Zellstruktur des Funknetzes wird die Ortung bzw. Positionsermittlung nochmals erleichtert, da dem Funksender die Zellen-Identifikation übermittelt wird, und so die Anzahl der mit dem (den) ermittelten Kanalmuster(n) zu vergleichenden Referenzmuster stark reduziert wird.

Das vorgestellte erfindungsgemäße Verfahren eignet sich grundsätzlich als eigenständiges Positionsermittlungssystem. Besonders vorteilhaft ist das Verfahren allerdings, wenn es als Ergänzung zu einem anderen, unabhängigen Positionsermittlungsverfahren verwendet wird, insbesondere, wenn als unabhängiges Positionsermittlungsverfahren ein satellitengestütztes Positionierungssystem verwendet wird.

Die Ermittlung von Referenzmustern erfolgt entweder durch Ermittlung der Position durch ein unabhängiges Positionierungssystem wie GPS und gleichzeitige Messung des Kanalmusters an dieser Position. Eine wesentlich einfachere, in der Regel aber ungenauere Methode besteht in der rechnerischen Ermittlung des Kanalmusters für eine bestimmte Position. Wird etwa für die Erfindung ein GSM-Mobilfunksystem verwendet, so gehen in die tatsächlichen, gemessenen Kanalmuster in der Regel von verschiedenen Netzbetreibern zugehörigen Punkkanälen empfangene Signale ein. Besonders genau und einfach lassen sich Referenzmuster, die dann auch gleich den aktuellesten Status besitzen, ermitteln, indem ein ermitteltes Kanalmuster sowie eine unabhängig davon ermittelte Position miteinander verknüpft und als Referenzmuster gespeichert werden.

Besonders einfach und genau gestaltet sich dies, wenn die unabhängige Positionsermittlung mit einem satellitengestützten Positionierungssystem durchgeführt wird.

Weiters werden die genannten Aufgaben mit einem eingangs erwähnten mobilen Gerät dadurch gelöst, dass Auswertemittel zum Ermitteln von Kanalmustern aus den empfangenen Funkkanälen und zumindest einen Speicher zum Abspeichern von Referenz-Kanalmustern aufweist, und Auswertemittel vorgesehen sind, welche dazu eingerichtet sind, durch einen Vergleich des zumindest einen ermittelten Kanalmusters mit Referenzmustern die Position der Funkempfangseinrichtung zu ermitteln.

Bei einer Ausführungsform ist die Funkempfangseinrichtung dazu eingerichtet, aus den empfangenen Funkkanälen ein Kanalmuster zu ermitteln, und weiters ist der zumindest einen Speicher der Funkempfangseinrichtung unmittelbar zugeordnet. Auf diese Weise können Musterermittlung und Vergleich unmittelbar und unabhängig von anderen Einrichtungen von der Empfangseinrichtung durchgeführt werden. Unter der Bezeichnung "Funkempfangseinrichtung dazu eingerichtet ...." ist dabei auch zu verstehen, dass beispielsweise eine bestehende Empfangseinrichtung um ein entsprechendes Modul, welches hard- und softwaremäßig zur Durchführung der Kanalermittlung und des Mustervergleichs eingerichtet ist, erweitert sein kann.

Besonders kostengünstig lässt sich ein erfindungsgemäßes System realisieren, wenn die Funkempfangseinrichtung eine Mobilfunk-Sende- und Empfangseinrichtung, insbesondere basierend auf dem GSM-Standard ist, da auf diese Weise bereits umfangreiche bestehende Einrichtungen verwendet werden können.

Auf die weiteren vorteilhaften Ausführungsformen des erfindungsgemäßen Systems wurde bereits im Zusammenhang mit den Verfahrensansprüchen eingegangen.

Im folgenden ist die Erfindung an Hand der Zeichnung näher erläutert. In dieser zeigen
Fig. 1 ein erfindungsgemäßes Positionierungssystem.
Fig. 2 eine schematische Darstellung einer Ausführungsform eines Ortungssystems,
Fig. 3 eine schematische Darstellung einer weiteren Ausführungsform eines Ortungssystems, welches mit einer fernen Auswerteeinheit in Verbindung steht,
Fig.4 eine beispielhafte, bekannte zellulare Struktur eines GSM-Mobilfunknetzes, und
Fig. 5 schematisch die Ortung von Empfangseinrichtungen mittels verteilter Punksendeeinrichtungen.

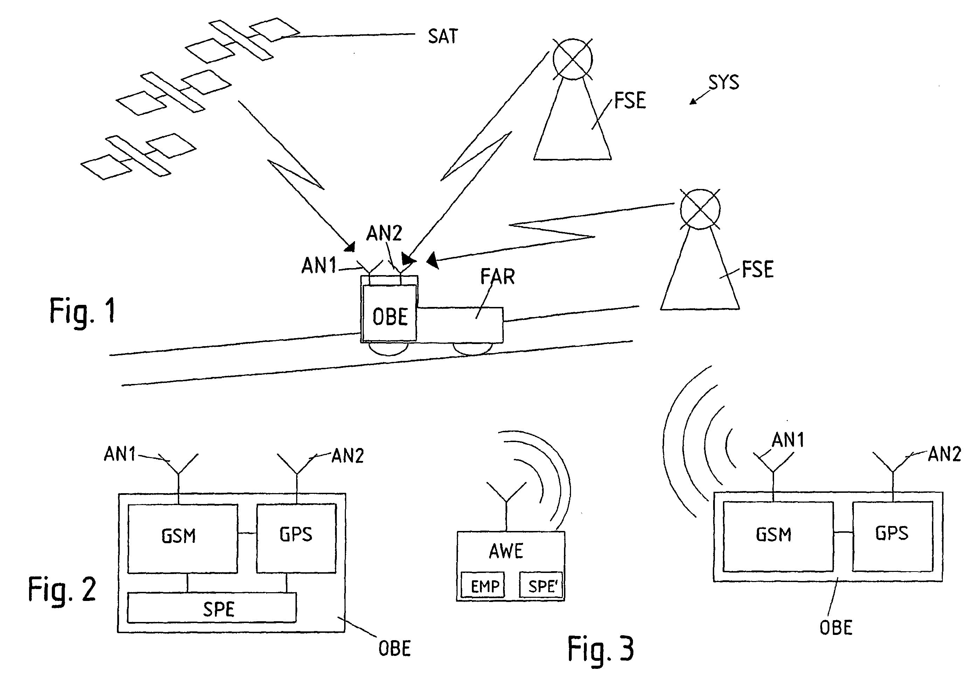

Die Fig. 1 zeigt beispielhaft ein System SYS zur Ortung beispielsweise eines Fahrzeuges FAR. Das Fahrzeug FAR weist ein "Fahrzeuggerät" OBE auf, welches dazu eingerichtet ist, über ihm zugeordnete Antennen AN1, AN2 Ortungssignale von Satelliten SAT eines Globalen Positionierungssystems (GPS), andererseits Funksignale von ortsfesten Funksendern FSE zu empfangen und gegebenenfalls auch Funksignale an Empfangsstationen zu übermitteln. Solche "Fahrzeuggeräte" OBE kommen insbesondere im Zusammenhang mit der Ortung von Fahrzeugen bei Mautsystemen, bei welchen eine Bezahlung bei einer Befahrung bei bestimmten Streckenabschnitten notwendig ist, zum Einsatz.

Wie im späteren auch noch mehrmals erwähnt, wird die Erfindung des weiteren an Hand der Verwendung eines zellularen Mobilfunksystems wie etwa GSM ("Global System for Mobile Communication") erläutert, welches gewisse Vorteile bietet, auf die ebenfalls noch eingegangen wird. Es sei an dieser Stelle aber gleich vorweg angeführt, dass
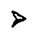 die Erfindung auch ohne ein zusätzliches Positionierungssystem wie GPS als "Stand-alone"-System zum Einsatz kommen kann; das oben angeführte "Fahrzeuggerät" OBE verfügt dann notwendigerweise nur über eine entsprechende Funkempfangs- und gegebenenfalls Sendeeinrichtung;
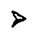 die Ortung nicht auf Fahrzeuge eingeschränkt ist, sondern auch die Position von Personen, etc., welche mit einem entsprechenden Funkempfänger und eventuell -sender ausgestattet sind;
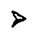 die Erfindung nicht nur im Zusammenhang mit Mautsystemen zum Einsatz kommt, sondern generell zur Positionsermittlung geeignet ist;
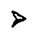 die Verwendung von zellularen Funknetzen, wie etwa GSM, von Vorteil ist, grundsätzlich aber jedes Funksystem verwendet werden kann, bei dem von mehreren verteilt angeordneten Funksendern Funksignale auf verschiedenen Funkkanälen permanent oder in bestimmten Zeitintervallen in einer Punkt-zu-Mehrpunkt-Verbindung ausgesendet werden. Auch ist die gleichzeitige Verwendung mehrerer Funksysteme, beispielsweise GSM und UMTS und UKW- Rundfunk, zur Ermittlung von Kanalmustern möglich, falls die Empfangseinrichtung entsprechend eingerichtet ist bzw. mehrere Empfangseinrichtungen entsprechend miteinander gekoppelt sind, mit mehreren Funksystemen zu kommunizieren.

Das Fahrzeuggerät OBE weist gemäß der Fig. 2 ein GPS-Modul GPS, welches mit einer Antenne AN1 von Satelliten Funksignale empfangen kann, und eine mit einer Antenne AN2 verbundene Funkempfangs- und Sendeeinrichtung GSM, die beispielsweise eben als GSM-Funkmodul ausgebildet ist, auf.

Die Ortung mittels GPS ist dem Fachmann hinreichend bekannt und soll daher hier nicht näher erläutert werden. Die erfindungsgemäße Funkortung, die im folgenden an Hand des zellularen GSM-Funksystems erörtert wird, basiert auf folgendem Gedanken. Die verteilten Sendeeinrichtungen des Funksystems senden jeweils auf bestimmten Funkkanälen, in der Regel sogenannten "Broadcast"-Funkkanälen, Funksignale aus. Diese Funksignale bilden ein "Kanalmuster", das in Abhängigkeit von der Position des Empfängers des Kanalmusters variiert. Durch einen Vergleich des ermittelten Kanalmusters mit vorab ermittelten Referenzmustern, denen eine Position zugeordnet ist, ist dann die Position der Empfangseinrichtung ermittelbar.

Wie der Fig. 2 zu entnehmen ist, weist das Fahrzeuggerät OBE bei einer Ausführungsform der Erfindung einen Speicher SPE, beispielsweise einen Flash-Speicher, auf, in dem die Referenzmuster abgelegt sind, wobei es grundsätzlich natürlich möglich ist, dass diese Referenzmuster auch in einem Speicher des GSM- und/oder GPS-Moduls abgelegt sind. Der Vergleich der ermittelten Kanalmuster mit Referenzmustern kann dann durch das Fahrzeuggerät selbst erfolgen, wobei für die Auswertung entsprechende Prozessor- und Speichermittel des GPS- und/oder GSM-ModuIs verwendet werden. Auch die Verwendung zusätzlicher, eigener Speicher- und Prozessormittel ist natürlich denkbar.

Oben beschriebene Ausführungsform bietet den Vorteil der autonomen, selbstständigen Positionsermittlung durch das Fahrzeuggerät, was etwa den Vorteil der Unabhängigkeit gegenüber einer zentralen Auswertung, auf die im folgenden noch eingegangen werden soll, bietet. Eine solche "Fahrzeug"-Auswertung im Fahrzeug ist aber unter Umständen aufwändiger als eine zentrale Auswertung und ein Aktualisieren der Referenzmuster-Datenbank(en) erfordert in diesem Fall mehr Aufwand.

Die Fig. 3 zeigt nochmals ein Fahrzeuggerät OBE, wiederum bestehend aus GSM- und GPS-Modul, jedoch ohne zusätzliche Speichereinrichtung für die Referenzmuster. Das Fahrzeuggerät OBE steht in diesem Fall über das GSM-Modul GSM mit einer fernen, von dem Fahrzeuggerät OBE getrennt ausgebildeten Auswerteeinheit AWE, in Funkverbindung, wozu diese einen entsprechenden Funkempfänger, in der Regel eine Sende/Empfangseinrichtung EMP, aufweist. Die ermittelten Kanalmuster bzw. die Informationen betreffend die ermittelten Kanäle werden per Funk an diese Auswerteeinheit AWE übermittelt, in welcher die Referenzmuster in einem Speicher SPE' abgespeichert sind, und es erfolgt die Positionermittlung durch die Auswerteeinheit AWE, welche dazu hard- und softwaremäßig entsprechend eingerichtet ist. Die ermittelte Position kann dann wiederum dem Fahrzeuggerät mit der Sende/Empfangseinrichtung EMP übermittelt werden und/oder beispielsweise an ein Mautsystem übermittelt werden, für welches die Positionsdaten beispielsweise für eine Abrechnung von Wichtigkeit sind.

Eine weitere Möglichkeit sei hier des weiteren ebenfalls noch kurz angeführt. Es besteht grundsätzlich auch die Möglichkeit, dass wie an Hand der Fig. 2 beschrieben, die Auswertung durch das Fahrzeuggerät selbst erfolgt. Damit nicht alle Referenzmuster in dem Speicher SPE der Einheit OBE gespeichert werden müssen, kann vorgesehen sein, dass die Referenzmuster-Datenbank in Abhängigkeit von der jeweiligen Position der Einheit OBE auf den neusten Stand gebracht wird, wozu die entsprechenden, jeweils relevanten Referenzmuster von einer zentralen Datenbank an die Einheit OBE übertragen und dort gespeichert werden, während andere Referenzdaten wieder aus dem Speicher gelöscht werden.

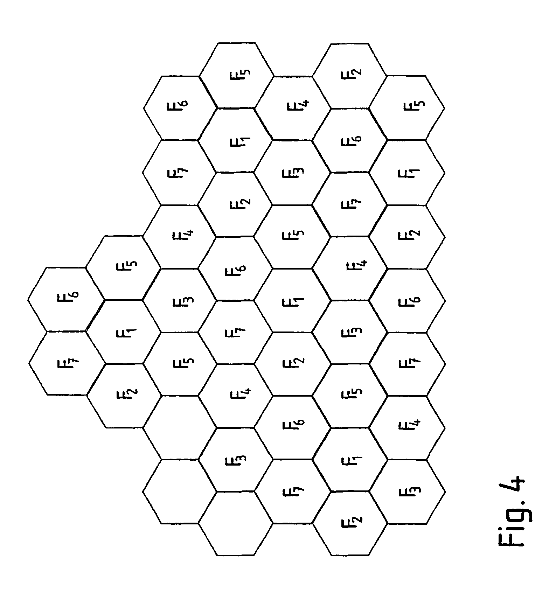

Die Fig. 4 zeigt schematisch ein zellulares Netz zur Versorgung eines ausgedehnten Gebietes. Zellulare Netze basieren auf der Einteilung der Gesamtfläche, auf der das Netz betrieben wird, in sogenannte Funkzellen, die jeweils von einer Basisstaion versorgt werden (für eine nähere Erörterung siehe auch Walke, Bernhard: Mobilfunknetze und ihre Protokolle, Band 1 Grundlagen, GSM, UMTS und andere zellulare Mobilfunknetze, Stuttgart : Teubner (Informationstechnik). Wie der Fig. 4 zu entnehmen ist, darf jede Basisstation nur einen Teil der insgesamt verfügbaren Frequenzkanäle nutzen, die zur Vermeidung von Störungen durch angrenzende Zellen erst in einem genügend großen Abstand wieder verwendet werden können. In der Fig. 4 bezeichnet Fᵢ (i = 1, 2, 3, ... n) die in der entsprechenden Zelle benutzten Gruppen von Frequenzkanälen.

In der Figur sind die Zellen idealisierend als regelmäßige Sechsecke dargestellt, was aber durch topografische und umgebungsbedingte Umstände nur annähernd den wirklichen Gegebenheiten entspricht. Im Realfall sind die Funkzellen in ihrer äußeren Form sehr unregelmäßig und überlappen sich außerdem um ca. 10 - 15 %, damit Mobilfunkstationen im Randbereich einer Zelle die Wahlmöglichkeit zwischen Basisstationen haben.

Jede Basisstation sendet auf einem oder mehreren Kanälen, den sogenannten Broadcast-Kanälen (auch Broadcast-Control-Channel - BCCH), verschiedene Informationen auf einer Punkt-zu-Mehrpunkt-Verbindung von der Feststation an die Mobilstationen der Funkzelle Informationen wie Kennzeichnung des Netzes, Verfügbarkeit bestimmter Operationen, von der Feststation und benachbarten Feststationen verwendeten Frequenzen, etc. Jeder Kanal trägt eine Kennung, beispielsweise sind die verschiedenen Kanäle durchnummeriert.

Eine Mobilstation kann nun einerseits den bzw. die Broadcast-Kanäle der momentanen Zelle empfangen, andererseits sind aber auch die Broadcast-Kanäle anderer, in der Regel benachbarter Zellen empfangbar. Dabei sind in der Regel nicht nur die Kanäle jenes Netzbetreibers, dem die Mobilstation "angehört", sondern auch die Broadcast-Kanäle anderer Netzbetreiber empfangbar, die dann zwar zumeist weniger Informationen enthalten, wobei diese aber für die Erfindung ohnehin irrelevant sind.

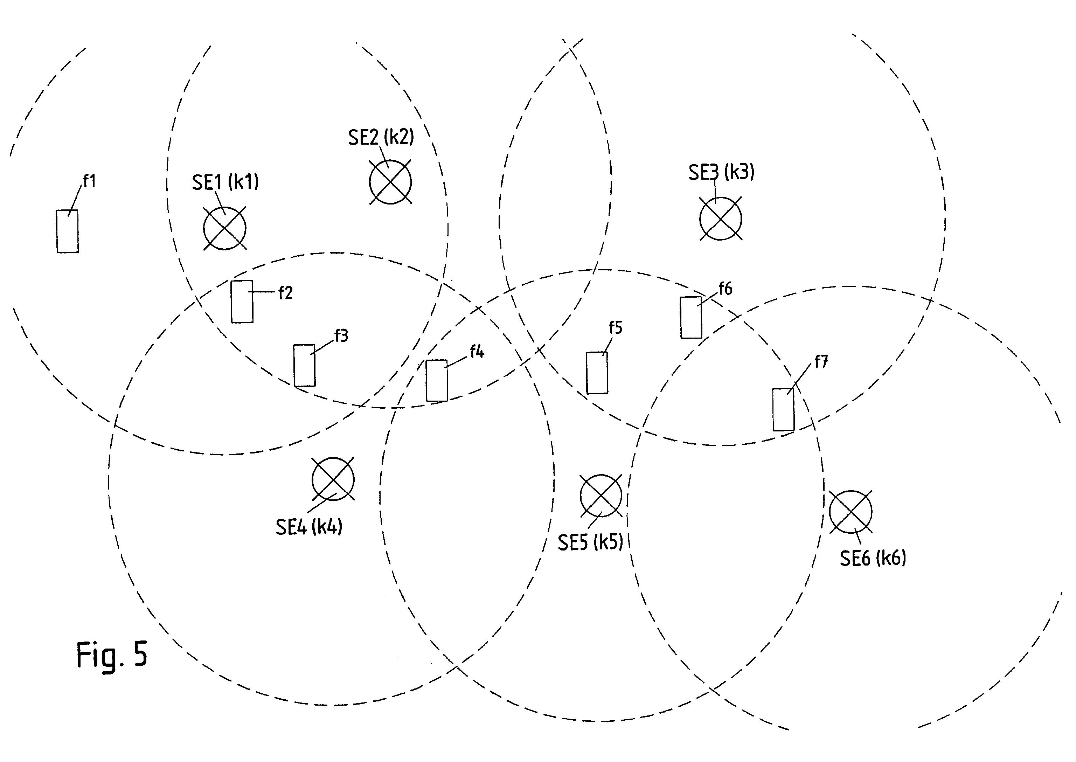

In den folgenden Tabellen sind nun verschiedene Beispiele für in einem Probebetrieb mit einem Fahrzeuggerät ermittelte Kanalmuster und deren Änderungen in Folge einer Bewegung des Fahrzeuges gezeigt. Weiters ist an Hand eines einfachen Beispiels nach der Fig. 5 noch das grundsätzliche Prinzip der Erfindung gezeigt.

Vorab sind kurz die Kriterien zusammengefasst, an Hand welcher die Erstellung eines Kanalmusters bzw. eine Ortung der Empfangseinheit erfolgt:
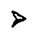 Die einfachste Möglichkeit besteht darin, ein Kanalmuster an Hand der empfangenen Kanäle zu ermitteln; beispielsweise würde ein solches einfaches Muster mit der in den Tabellen 1a - 1f enthaltenen Information darin bestehen, dass die Kanäle mit den Nummern 84,95,96,97,105,109,116 (siehe Spalte chann) empfangen werden.
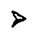 Dieses Muster kann dadurch verfeinert werden, dass eine Liste der empfangenen Kanäle erstellt wird, wobei die Reihung der Kanäle nach der Empfangsstärke (Spalte dBm) der Kanäle erfolgt. Die Reihung der Kanäle nach Tab. 1a lautet beispielsweise: 84, 96, 109, 105, 116, 97, 95, wobei anzumerken ist, dass bei der hier verwendeten Notation immer der Kanal der empfangenen Basisstation - in diesem Fall Kanal Nr. 84 - der erstgereihte ist.
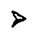 Ein weiteres Kriterium für die Mustererstellung ist der Wert der gemessenen Feldstärke (Spalte dBm) an sich. An dieser Stelle soll allerdings daraufhin gewiesen werden, dass die Feldstärke einerseits wetter- und tageszeitlich bedingt Schwankungen unterliegt, und dass auch geografische und topologische Gegebenheiten die Ausbreitung der Funkwellen beeinflussen. Insbesondere bei Kanälen mit eng beisammen liegender Empfangsfeldstärke hat daher - auch was die Reihung der Kanäle an sich betrifft - die Musterbeurteilung unter besonderer Berücksichtigung dieser Einflussfaktoren zu geschehen, um nicht zu falschen Ergebnissen zu gelangen.
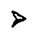 Ein wesentliches Kriterium für die Mustererstellung bei Verwendung von zellularen Funksystemen ist die Kennzeichnung der momentanen Funkzelle, beispielsweise in den Tabelle 1a - 1f die Zelle mit der Kennung 5BB3 (Spalte cell).
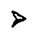 Weitere Informationen, die heranziehbar sind, sind jene über den Netzbetreiber. In den Figuren ist diese Information in der Spalte PLMN zu finden. Beispielsweise bedeutet "023203" das Heimatnetz des Mobilfunkempfängers, während es sich bei den mit "000000" bezeichneten Kanälen um Broadcast-Kanäle aus "fremden" Netzen, die aber trotzdem von dem Empfänger empfangen werden, handelt. Über welchen Netzbetreiber es sich dabei handelt, kann aber in der Regel nicht ermittelt werden.
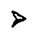 Bei der Durchführung des Mustervergleichs wird auch die "Musterhistorie" des Empfängers mit berücksichtigt, d. h. neben dem aktuell ermittelten Muster werden eines oder mehrere zeitlich davor ermittelte Kanalmuster ebenfalls berücksichtigt, wodurch sich die Genauigkeit und Eindeutigkeit der Positionsermittlung wesentlich steigern lässt. Insbesondere bei zellularen Funksystemen aus dem Grund von Vorteil, weil sich die verwendeten Funkkanäle wiederholen - so werden etwa in allen mit F1 (F2, F3, etc.) bezeichneten Zellen nach der Fig. 4 die gleichen Funkkanäle verwendet. Dadurch können im Bereich von verschiedenen Zellen identische oder zumindest ähnliche Kanalmuster entstehen. Um daraus möglicherweise resultierende Mehrdeutigkeiten auszuschließen, wird zur Positionsermittlung auch die Musterhistorie verwendet, da dann die Mehrzahl möglicher Positionen gleich von Vorneherein ausgeschlossen werden kann.

Zur näheren Erläuterung soll vorerst noch auf vereinfachte Weise an Hand der Fig. 5 und anschließend auf in einem Probebetrieb ermittelte Kanalmusterabfolgen wie in den Tabellen 1a - 1f, 2a - 2c, 3a - 3e dargestellt eingegangen werden.

Die Fig. 5 zeigt mehrere ortsfeste Sendeeinheiten SE1 - SE 6, von denen jede einen eigenen Broadcast-Kanal k1 - k6 aussendet. Im folgenden wird in idealisierender Weise davon ausgegangen, dass jeder Kanal nur innerhalb eines bestimmten Radius um die Sendeeinheit empfangbar ist, wobei dieser Radius für alle Kanäle gleich sei. Des weiteren wird davon ausgegangen, dass alle Kanäle das gleiche Verhalten hinsichtlich der Signalschwächung mit zunehmender Entfernung von der Sendeeinheit aufweisen. Auch umgebungsbedingte Beeinflussungen der abgestrahlten Funksignale sollen hier nicht berücksichtigt werden.

Betrachtet man verschiedene Empfänger F1 - F7, beispielsweise oben besprochene Fahrzeuggeräte OBE in einem Fahrzeug, so lässt sich betreffend die ermittelten Kanalmuster folgendes feststellen.

Empfänger F1: Diese befindet sich lediglich im Empfangsbereich der Sendestation SE1, es kann also nur der Kanal k1 empfangen werden.

Empfänger F2: Dieser befindet sich im Empfangsbereich der Stationen SE1, SE2 und SE4. Das Kanalmuster bildet sich daher aus den Kanälen k1, k2 und k4. Eine Reihung der empfangenen Kanäle hinsichtlich ihrer Empfangsstärke ergibt k1 > k2 > k4.

Empfänger F3: Dieser befindet sich ebenso wie Empfänger F2 im Empfangsbereich der Stationen SE1, SE2 und SE4. Das Kanalmuster bildet sich daher aus den Kanälen k1, k2 und k4. Eine Unterscheidung der Position von F2 und F3 lediglich an Hand dieser Information ist nicht möglich. Allerdings ergibt eine Reihung der empfangenen Kanäle ihrer Empfangsstärke k4 > k1 > k2, sodass an Hand dieser Informationen einen Positionsunterscheidung möglich ist.

Empfänger F4: Dieser befindet sich in relativer Nähe zu Empfänger F3, allerdings im Sendebereich der Stationen SE2, SE4 und SE5, wodurch alleine durch das Kanalmuster k2, k4, k5 eine Unterscheidung zur Position des Empfängers F3 möglich ist. Eine genauere Ortung wird wiederum möglich bei einer Reihung der Kanäle hinsichtlich ihrer Empfangsstärke: k4 > k2 > k5.

Empfänger F5: Dieser befindet sich im Empfangsbereich der Stationen SE3 und SE5. Das Kanalmuster bildet sich daher aus den Kanälen k3 und k5. Eine Reihung der empfangenen Kanäle hinsichtlich ihrer Empfangsstärke ergibt k5 > k3.

Empfänger F6: Dieser befindet sich ebenfalls im Empfangsbereich der Stationen SE3 und SE5. Allerdings ergibt eine Reihung der empfangenen Kanäle hinsichtlich ihrer Empfangsstärke k3 > k5, sodass an Hand dieses Kanalmusters eine Unterscheidung der Positionen von F5 und F6 möglich ist.

Empfänger F7: Dieser befindet sich ebenfalls im Empfangsbereich der Stationen SE3 und SE5, allerdings zusätzlich auch noch im Empfangbereich der Station SE6, sodass alleine an Hand der Information über die empfangenen Kanäle k3, k5 und k6 eine Positionsunterscheidung möglich ist. Genauer wird eine Ortung durch Verfeinerung des Kanalmusters mittels Reihung der Kanäle: k6 > k5 > k3.

In den folgenden Tabellen sind "realistische" Kanalmuster, d. h. in einem Testversuch ermittelte Kanalmuster dargestellt und im folgenden beschrieben. In der zweiten Zeile jeder Tabelle findet sich jeweils der Zeitpunkt, zu dem das Muster ermittelt wurde, die vierte Zeile zeigt jeweils den Monitoring-Befehl "at^moni", mit dem die Informationen über die einzelnen, empfangenen Broadcast-Kanäle angezeigt werden können.

Wie den Tabellen 1a - 1f weiters zu entnehmen ist, befindet sich das zu ortende Fahrzeug während dem gesamten Zeitraum von 18:07:34 -18:07:40 in der Zelle 5BB3. Auch die empfangenen Kanäle 84, 95, 96, 97, 105, 109, 116 ändern sich in dieser Zeitspanne nicht. In den Tabellen 1a - 1c ändert sich auch die Reihung 84, 96, 109, 105, 116, 97, 95 der Kanäle und auch die Empfangsfeldstärke an sich nicht, sodass in diesem (allerdings sehr kurzen Zeitraum) keine Änderung der Position feststellbar ist.

In der Tabelle 1d ist bereits eine Änderung der Reihung festzustellen, sowohl die Kanäle 105 und 109 als auch die Kanäle 97 und 95 haben ihre Plätze vertauscht. Dieses Muster ändert sich auch zu den in Tabelle 1e und 1f wiedergegebenen Zeitpunkten nicht mehr.

Bemerkenswert in den Tabellen 1a - 1f ist schließlich auch noch, dass ein Kanal eines "Fremdanbieters", nämlich Kanal 96, jener Kanal ist, der am stärksten in dem Aufenthaltsbereich des Empfängers zu empfangen ist.

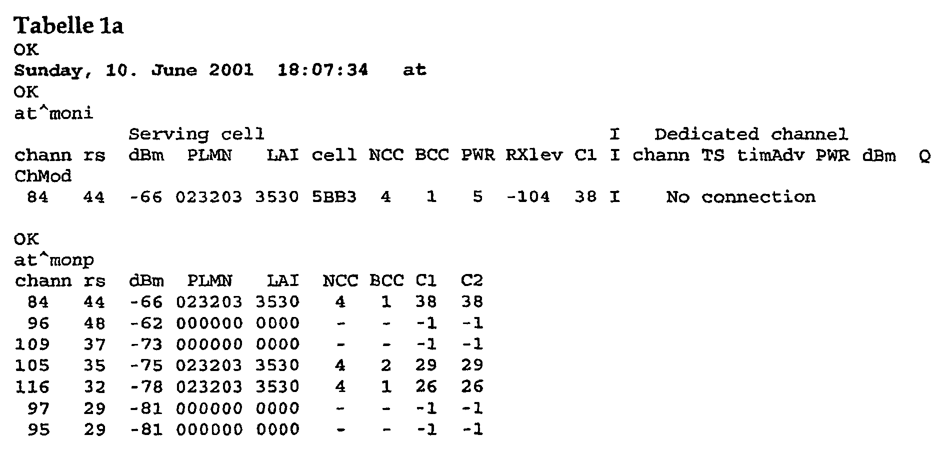

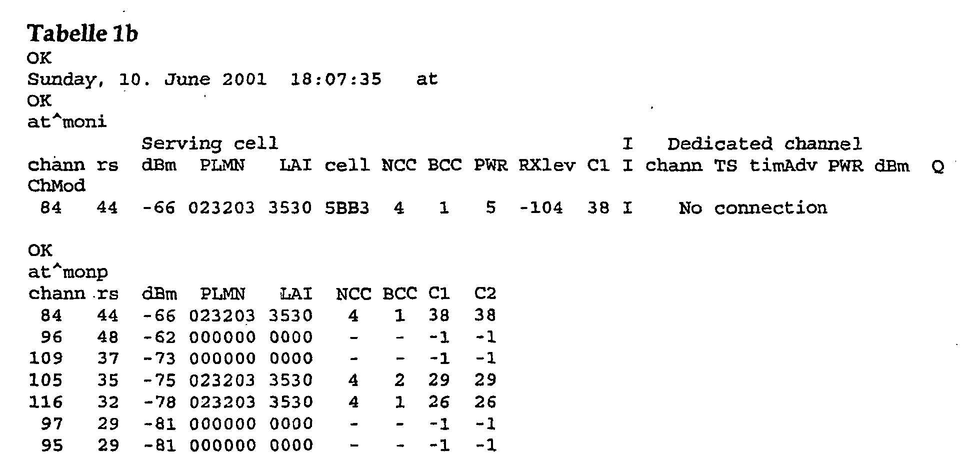

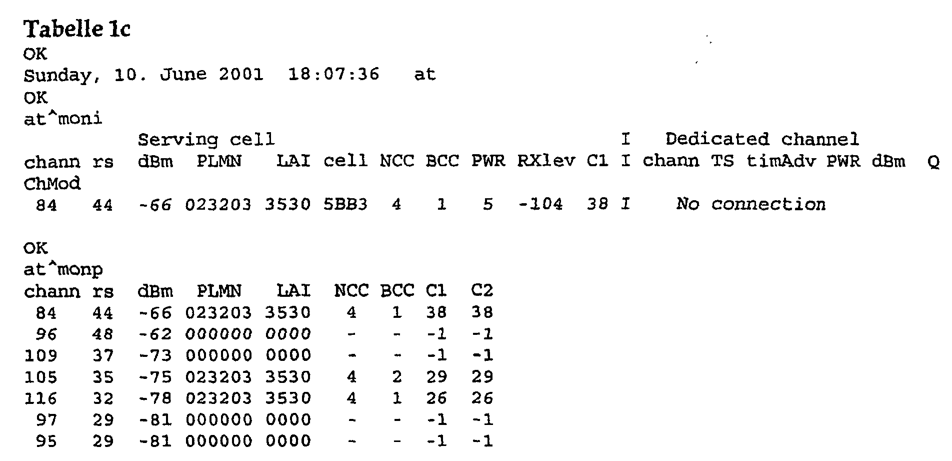

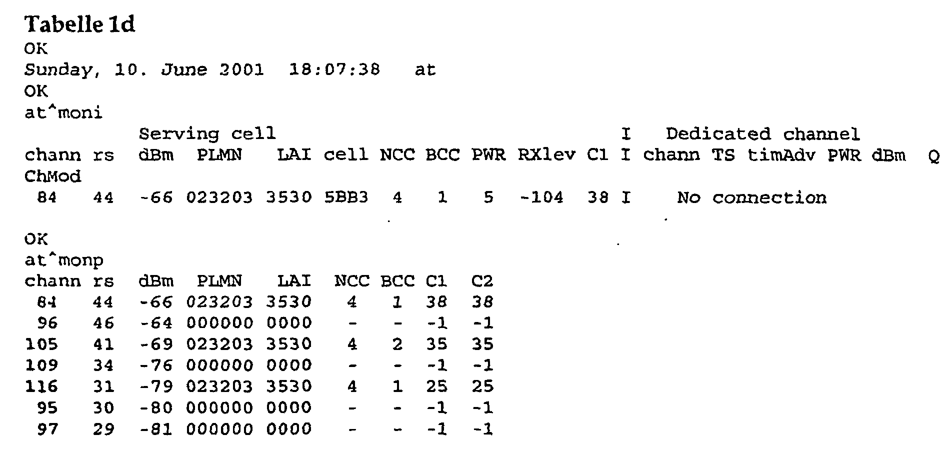

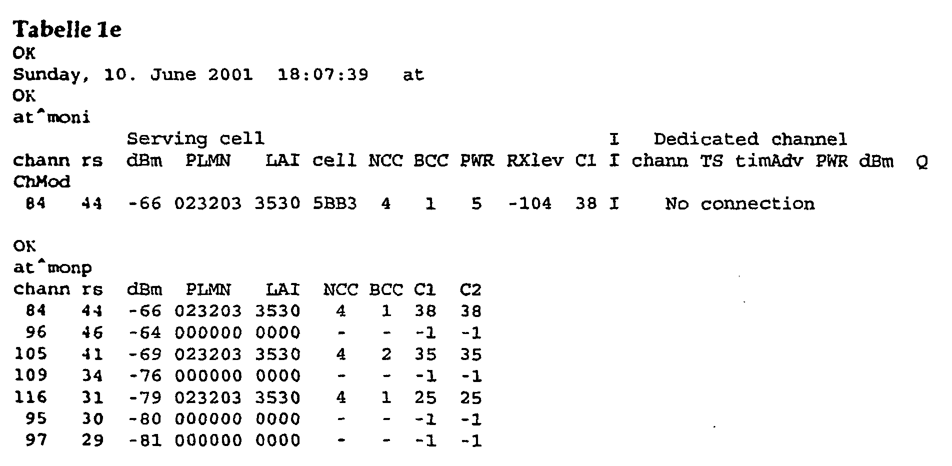

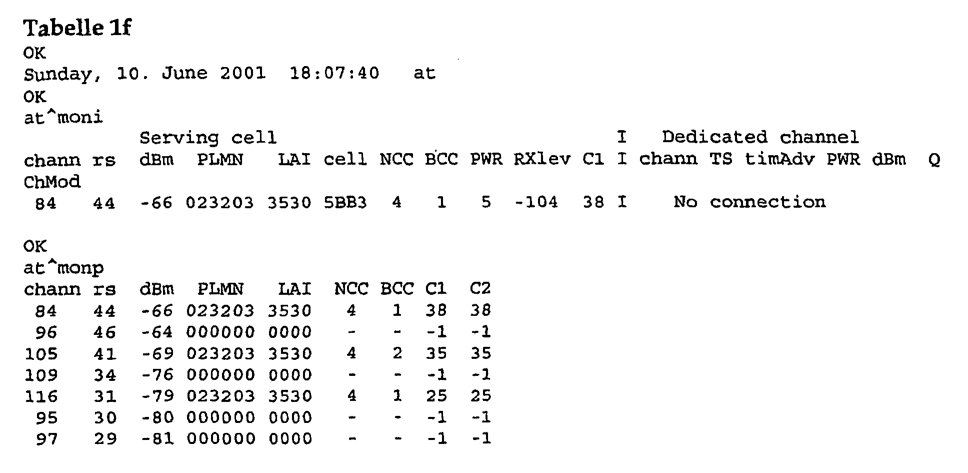

Die Tabelle 2a zeigt das Kanalmuster zu einem 1 Sekunde späteren Zeitpunkt als in Tabelle 1f, wie zu erkennen ist, hat sich das Muster hier noch nicht geändert. Tabelle 2b zeigt bereits ein etwas verändertes Muster, wenn man die Feldstärken der Kanäle 96, 105, 109, 116, 95 und 97 zu Tabelle 2a vergleicht. Eine noch gravierendere Änderung des Kanalmuster ist dann schließlich in Tabelle 3c zum Zeitpunkt 18:07:47 zu erkennen, wo einerseits die Reihung stark geändert wird und andererseits als weitere Zusatzinformation zusätzlich noch der Kanal 108 empfangen wird.

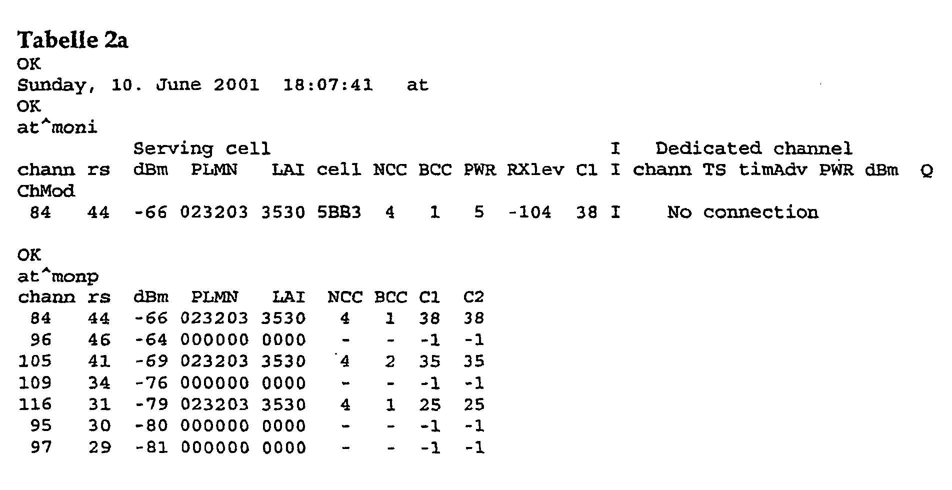

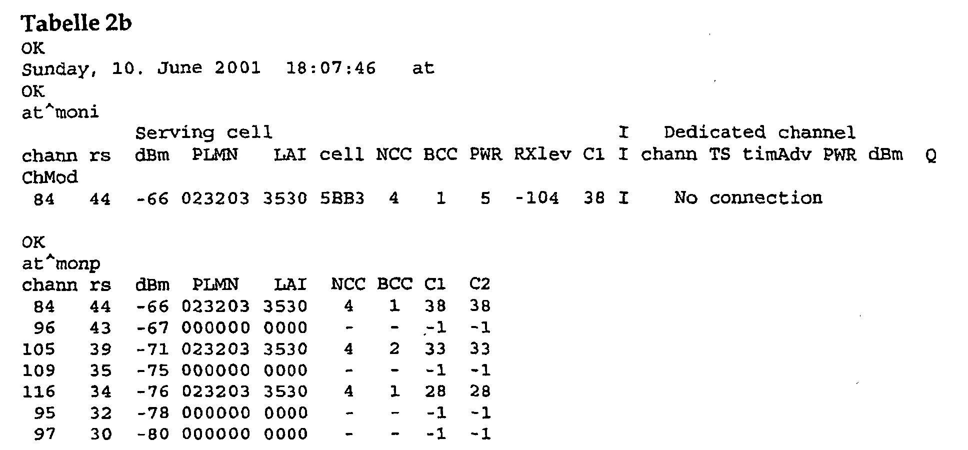

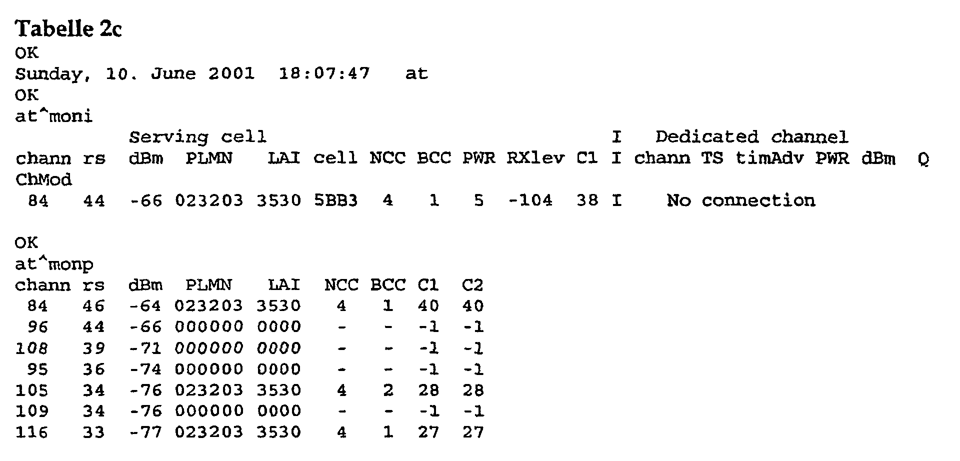

In den Tabellen 3a - 3e ist schließlich noch der interessante Fall eines Zellenwechsels erkennbar. Gemäß den Tabellen 3a und 3b befindet sich der Empfänger noch in der Zelle 5BB3, mit den empfangenen Kanälen 84, 111, 109, 97, 96, 110, 115. Zu dem in Tabelle 3c gezeigten Zeitpunkt 18:08:29 befindet sich der Empfänger hingegen schon in der Zelle 0D04, in der die neue Basisstation (natürlich) auch nicht mehr Kanal 84 sondern Kanal 95 aussendet. Die Kanäle 84, 97 und 115 können nach wie vor empfangen werden, während die Kanäle 95,114, 108 und 81 in diesem Muster neu sind. Die Reihung 95,114,108,84,97,81,115 der Kanäle ändert sich zu den in den Tabellen 3d und 3f angegebenen Zeitpunkten nicht mehr, und auch der Wert der empfangenen Feldstärke an sich bleibt unverändert, was allerdings auf Grund der geringen Zeitabstände auch nicht anders zu erwarten war.

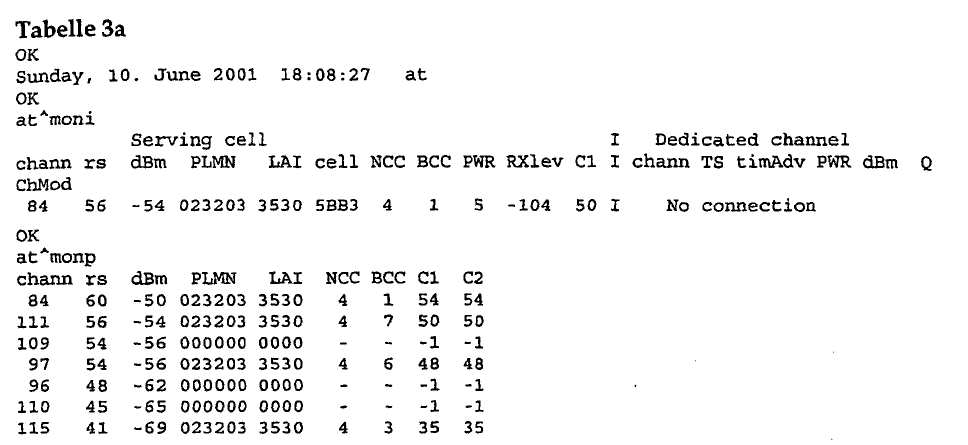

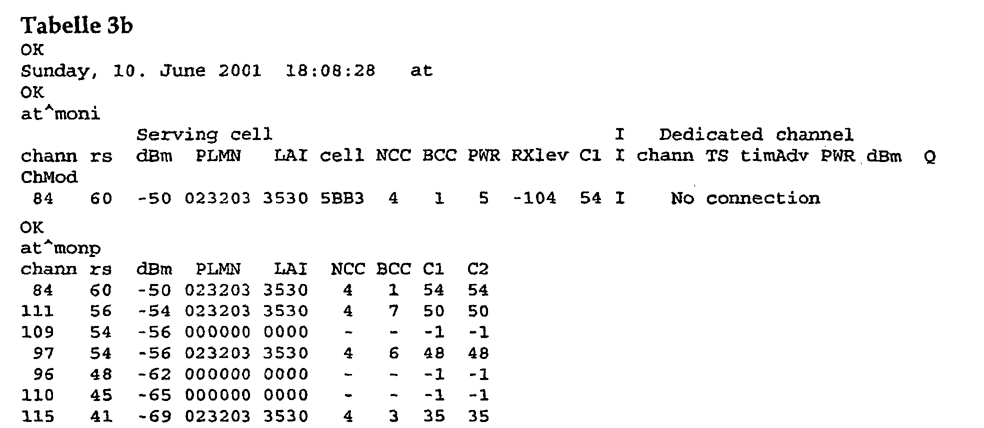

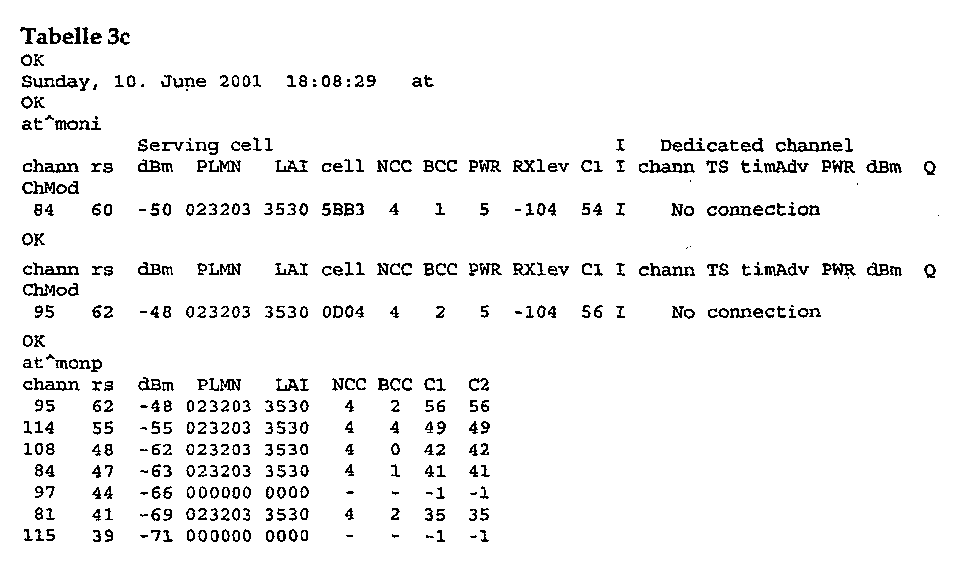

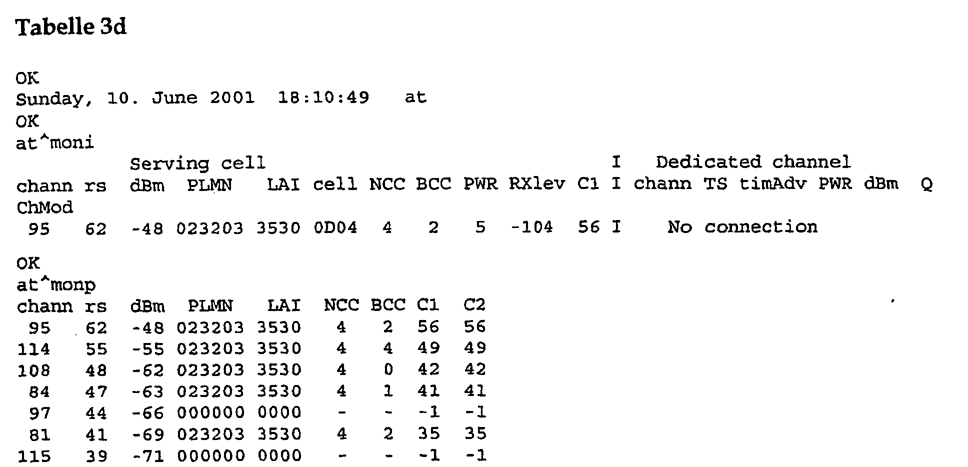

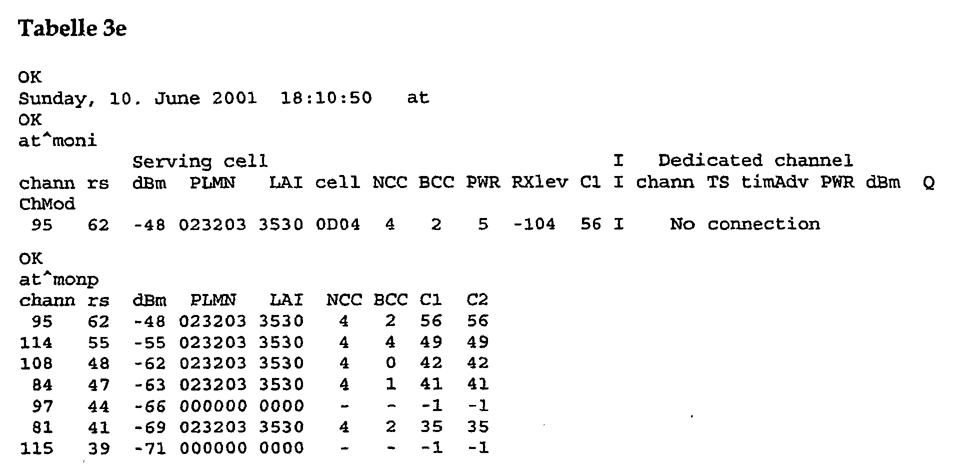

Obige Muster werden also aus den verschiedenen empfangenen Kanälen gebildet, und diese Muster werden dann mit Referenzmustern verglichen. Aus diesem Vergleich kann dann auf die momentane Position des Empfängers zurückgeschlossen werden. Der Vergleich kann beispielsweise durch den Empfänger selbst stattfinden, oder die ermittelten Muster bzw. Kanalinformationen werden an eine Auswerteeinheit, wie dies oben eingehend erläutert wurde, zur Positionsermittlung übermittelt.

Die Musterermittlung wurde oben beispielhaft an einem zellularen GSM-Mobilfunknetz erläutert. Grundsätzlich ist wie bereits erwähnt jedes Rundfunknetz verwendbar, bei dem ortsfeste Sendestationen verwendet werden, welche Informationen auf jeweils einem oder auch mehreren Funkkanälen in einer Punkt-zu-Mehrpunkt-Verbindung aussenden.

Dabei können bestehende Mobilfunknetze ebenso wie zukünftige, aber auch Rundfunknetze, etwa das UKW-Netz, verwendet werden. Wichtig ist in diesem Zusammenhang auch, dass zur Musterermittlung natürlich auch mehrere unterschiedliche Netze gemeinsam verwendet werden können, insbesondere auch mehrere Mobilfunknetze von unterschiedlichen Anbietern, solange der Empfänger dazu eingerichtet ist, die entsprechenden Kanäle zu empfangen.

Die Ermittlung kann auf verschiedene Weisen erfolgen. Eine besonders genaue Methode besteht in der Vermessung von Mustern an bestimmten Punkten. Natürlich wird dieses Verfahren mit zunehmender Granularität sehr aufwändig. Alternativ dazu oder zusätzlich können Referenzmuster mit Computermodellen errechnet werden. Nachteilig hieran ist auf der einen Seite der naturgemäß modellhafte Ansatz solcher Berechnungen, andererseits unter Umständen der Mangel an Informationen über beispielsweise Sendestationen einen anderen Mobilfunknetzanbieters. Solche nicht vorliegenden Informationen können in ein Referenzmuster grundsätzlich nur über Messungen von Mustern eingehen.

Besonders vorteilhaft ist es in diesem Zusammenhang, wenn das der Erfindung zu Grunde liegende Verfahren bzw. System "selbstlernend" ausgebildet ist. Darunter ist folgendes zu verstehen. Einerseits wird natürlich über die Kanalmusterermittlung die Position des Empfängers ermittelt. Andererseits besteht natürlich auch die Möglichkeit, dass die Position des Empfängers auf unabhängige Weise ermittelt wird. Eine solche Ermittlung kann beispielsweise "manuell", durch einen Blick in eine Landkarte, geschehen, oder durch die Verwendung anderer Positionierungsverfahren, wie etwa das schon angesprochene GPS. Die auf diese unabhängige Art und Weise ermittelten Positionsdaten können nun dem an dieser Stelle ermittelten Kanalmuster zugeordnet werden, und das so gewonnene Referenzmuster kann dann in einer Empfänger-internen Datenbank abgespeichert werden oder beispielsweise per Funk an eine ferne Datenbank etwa einer Auswerteeinheit übermittelt werden.

Auf diese Weise ist es dann auch möglich, neu hinzukommenden Sendeeinrichtungen oder entfernte Sendeeinrichtungen mit zu berücksichtigen, und das vorgestellte Positionierungsverfahren bzw. System kann durch den Betrieb ständig hinsichtlich der Ortungsgenauigkeit verbessert werden.

Eine Ortung gemäß der vorliegenden Erfindung ist insbesondere im Zusammenhang mit Mautsystemen von Vorteil, da hier auch das entsprechende "Fahrzeuggerät" schon vorhanden ist. Das Ortungssystem lässt sich kostengünstig realisieren, da über weite Strecken auf bestehende Infrastruktur in Form von Mobilfunk-Sendestationen, Rundfunkstationen, etc. zurückgegriffen werden kann.

Natürlich eignet sich das vorgestellte Positionierungsverfahren aber auch in Kombination mit anderen Verfahren, und auch in Alleinstellung ist die Positionsermittlung auf diese Art und Weise möglich.

## Patentansprüche

1. Verfahren zur Positionsermittlung eines mobilen Gerätes (OBE), welches zumindest eine Funksignal-Empfangseinrichtung (GSM) aufweist, mittels welcher verschiedene Funkkanäle (k1 - k6) empfangbar sind, welche von ortsfesten Sendeeinrichtungen (FSE, SE1 - SE6) über eine Punkt-zu-Mehrpunkt-Verbindung ausgesendet werden, wobei
a) an Hand der von der Empfangseinrichtung (GSM) empfangenen Funkkanäle (k1 - k6) zumindest ein Kanalmuster ermittelt wird,
b) das zumindest eine Kanalmuster mit vorgegebenen Referenzmustern verglichen wird, und
c) durch Auswerten dieses Vergleichs auf die momentane Position der Funksignal-Empfangseinrichtung (GSM) geschlossen wird,
**dadurch gekennzeichnet, dass** die Schritte a) - c) in dem mobilen Gerät (OBE) durchgeführt werden.

2. Verfahren nach Anspruch 1, **dadurch gekennzeichnet, dass** zur Positionsermittlung zusätzlich zeitlich vorher ermittelte Kanalmuster verwendet werden.

3. Verfahren nach Anspruch 1 oder 2, **dadurch gekennzeichnet, dass** das Kanalmuster aus den Kanalkermungen der empfangenen Funkkanäle (k1 - k6) gebildet wird.

4. Verfahlen nach einem der Ansprüche 1 bis 3, **dadurch gekennzeichnet, dass** ein Kanalmuster aus der Reihung der empfangenen Kanäle (k1 - k6) nach Empfangsstärke gebildet wird.

5. Verfahren nach Anspruch 4, **dadurch gekennzeichnet, dass** zur Ermittlung eines Kanalmusters zusätzlich weiters noch die genaue Empfangsstärke herangezogen wird.

6. Verfahren nach einem der Ansprüche 1 bis 5, **dadurch gekennzeichnet, dass** zur Musterermittlung Broadcast-Funkkanäle verwendet werden.

7. Verfahren nach einem der Ansprüche 1 bis 6, **dadurch gekennzeichnet, dass** zur Musterermittlung die Funkkanäle (k1 - k6) eines zellularen Funknetzes verwendet werden, und die Kennung der jeweiligen Aufenthaltszelle des Funkempfängers zur Musterermittlung verwendet wird.

8. Verfahren nach Anspruch 6 und 7, **dadurch gekennzeichnet, dass** GSM-Broadcast-Kanäle verwendet werden.

9. Verfahren nach einem der Ansprüche 1 bis 8, **dadurch gekennzeichnet, dass** es als Ergänzung zu einem anderen, unabhängigen Positionsermittlungsverfahren verwendet wird.

10. Verfahren nach Anspruch 9, **dadurch gekennzeichnet, dass** als unabhängiges Positionsermittlungsverfahren ein satellitengestütztes Positionierungssystem verwendet wird.

11. Verfahren nach einem der Ansprüche 1 bis 10, **dadurch gekennzeichnet, dass** ein ermitteltes Kanalmuster sowie eine unabhängig davon ermittelte Position miteinander verknüpft und als Referenzmuster gespeichert werden.

12. Verfahren nach Anspruch 10 und 11, **dadurch gekennzeichnet, dass** die unabhängige Positionsermittlung mit einem satellitengestützten Positionierungssystem durchgerührt wird.

13. Verfahren nach einem der Ansprüche 1 bis 12, **gekennzeichnet durch** eine Verwendung im Zusammenhang mit einem Mautsystem.

14. Mobiles Gerät (OBE), welches dazu eingerichtet ist, mittels zumindest einer Funkempfangseinrichtung (GSM) Funksignale von einer Anzahl ortsfester, verteilt angeordneter Funk-Sendeeinrichtungen (FSE; SE1 - SE6), welche auf zumindest je einem Funkkanal aus einer vorgegebenen Anzahl von Funkkanälen (k1 - k6) Funksignale über eine Punkt-zu-Mehrpunkt-Verbindung aussenden, zu empfangen.
**dadurch gekennzeichnet, dass**
Auswertemittel (GSM) zum Ermitteln von Kanalmustern aus den empfangenen Funkkanälen (k1 - k6) und zumindest einen. Speicher (SPE) zum Abspeichern von Referanz-Kanalrnustern aufweist, und Auswertemittel (GSM) vorgesehen sind, welche dazu eingerichtet sind, durch einen Vergleich des zumindest einen ermittelten Kanalmusters mit Referenzmustern die Position der Funkempfangseinrichtung (GSM) zu ermiteln.

15. Gerät nach Anspruch 14, **dadurch gekennzeichnet, dass** die Funkempfangseinrichtung (GSM) dazu eingerichtet ist, aus den empfangenen Funkkanälen (k1 - k6) ein Kanalmuster zu ermitteln.

16. Gerät nach Anspruch 14, **dadurch gekennzeichnet, dass** es von der Funkempfangseinrichtung (GSM) getrennte Mittel zum Auswerten und Speichern umfasst, wobei der zumindest eine Speicher (SPE) und/oder das Auswertemittel der Funkempfangseinrichtung (GSM) unmittelbar zugeordnet sind.

17. Gerät nach einem der Ansprüche 14 bis 16, **dadurch gekennzeichnet, dass** die Funkempfangseinrichtung (GSM) eine Mobilfunk-Sende- und Empfangseinrichtung ist.

18. Gerät nach Anspruch 17, **dadurch gekennzeichnet, dass** die Funkempfangseinrichtung (GSM) eine Mobilfunk-Sende- und Empfangseinrichtung basierend auf dem GSM-Standard ist.

19. Gerät nach einem der Ansprüche 14 bis 18, **dadurch gekennzeichnet, dass** zusätzlich zur Positionsermittlung ein unabhängiges Positionsermittlungssystem verwendet ist.

20. Gerät nach Anspruch 19, **gekennzeichnet durch** die Verwendung eines satellitengestützten, unabhängigen Positionierungssystems.

21. Gerät nach einem der Ansprüche 14 bis 20, **gekennzeichnet durch** eine Verwendung im Zusammenhang mit einem Mautsystem.

## Claims

1. A method of computing the position of a mobile device (OBE) having at least one radio signal receiving system (GSM), by means of which various radio channels (k1 - k6) can be received which are emitted from stationary transmitting units (FSE, SE1 - SE6) via point-to-multipoint communication, wherein
a) at least one channel pattern is determined with reference to the radio channels (k1 - k6) received by the receiving system (GSM),
b) the at least one channel pattern is compared with given reference patterns, and
c) from the evaluation of said comparison the current position of the radio signal receiving system (GSM) is deduced,
**characterized in that** said steps a) through c) are carried out within said mobile device (OBE).

2. A method as defined in claim 1, **characterized in that** position computation is additionally aided by the use of channel patterns determined some time previously.

3. A method as defined in claim 1 or claim 2, **characterized in that** said channel pattern is formed from the channel identifiers of the received radio channels (k1 - k6).

4. A method as defined in any one of claims 1 to 3, **characterized in that** a channel pattern is formed by order-sorting the received channels (k1 - k6) according to reception strength.

5. A method as defined in claim 4, **characterized in that** for the purpose of determining a channel pattern use is additionally made of the absolute reception strength.

6. A method as defined in any one of claims 1 to 5, **characterized in that** for the purpose of channel determination broadcast radio channels are used.

7. A method as defined in any one of claims 1 to 6, **characterized in that** for the purpose of pattern determination the radio channels (k1 - k6) of a cellular radio network are used, and the identifier of the cell currently traversed by the radio receiver is used for pattern determination.

8. A method as defined in claim 6 and claim 7, **characterized in that** GSM broadcast channels are used.

9. A method as defined in any one of claims 1 to 8, **characterized in that** it is used to supplement some other, independent positioning method.

10. A method as defined in claim 9, **characterized in that** the independent positioning method used is a satellite-aided positioning system.

11. A method as defined in any one of claims 1 to 10, **characterized in that** a determined channel pattern and an independently determined position are combined and stored as a reference pattern.

12. A method as defined in claim 10 and claim 11, **characterized in that** said independent position determination is carried out using a satellite-aided positioning system.

13. A method as defined in any one of claims 1 to 12, **characterized by** the use thereof in conjunction with a toll-collecting system.

14. A mobile device (OBE) which is adapted to receive, by means of at least one radio reception system (GSM), radio signals from a number of stationary, geographically distributed radio transceiver systems (FSE; SE1 - SE6) that emit, on at least one radio channel of a specified number of radio channels (k1 - k6), radio signals via point-to-multipoint communication,
**characterized in that**
(it) comprises evaluating means (GSM) for the ascertainment of channel patterns from the received radio channels (k1 - k6) and at least one storage unit (SPE) for storing reference channel patterns, and evaluating means (GSM) are provided which are adapted to ascertain the position of the radio reception system (GSM) by effecting a comparison of the at least one determined channel pattern with reference patterns.

15. A device as defined in claim 14, **characterized in that** said radio reception system (GSM) is adapted to ascertain a channel pattern from the received radio channels (k1 - k6):

16. A device as defined in claim 14, **characterized in that** it comprises means for evaluation and storage which are separate from said radio reception system (GSM), the at least one storage unit (SPE) and/or the evaluating means being directly assigned to the radio reception system (GSM).

17. A device as defined in any one of claims 14 to 16, **characterized in that** said radio reception system (GSM) is a mobile radio transceiver system.

18. A device as defined in claim 17, **characterized in that** said receiving system (GSM) is a mobile radio transceiver system based on the GSM standard.

19. A device as defined in any one of claims 14 to 18, **characterized in that** in addition to said position computation means use is made of an independent position-calculating system.

20. A device as defined in claim 19, **characterized by** the use of a satellite-aided, independent positioning system.

21. A device as defined in any one of claims 14 to 20, **characterized by** the use thereof in conjunction with a toll-collecting system.

## Revendications

1. Procédé pour déterminer la position d'un appareil mobile (OBE) qui présente au moins un dispositif de réception de signaux radio (GSM) au moyen duquel différents canaux radio (k1 - k6) sont recevables qui sont émis par des dispositifs d'émission stationnaires (FSE, SE1 - SE6) sur une liaison point à multipoints, dans lequel
a) à l'aide des canaux radio (k1 - k6) reçus par le dispositif de réception (GSM) au moins une trame de canaux est déterminée,
b) l'au moins une trame de canaux est comparée avec des trames de référence prédéfinies, et
c) la position momentanée du dispositif de réception des signaux radio (GSM) est déduite par exploitation de cette comparaison,
**caractérisé en ce que** les étapes a) - c) sont exécutées dans l'appareil mobile (OBE).

2. Procédé selon la revendication 1, **caractérisé en ce que** l'on utilise pour la détermination de position également des trames de canaux déterminées préalablement.

3. Procédé selon la revendication 1 ou 2, **caractérisé en ce que** la trame de canaux est formée à partir des identifications des canaux radio (k1 - k6) reçus.

4. Procédé selon l'une quelconque des revendications 1 à 3, **caractérisé en ce qu'**une trame de canaux est formée à partir de l'enchaînement des canaux (k1 - k6) reçus selon l'intensité de réception.

5. Procédé selon la revendication 4, **caractérisé en ce que** pour déterminer une trame de canaux on utilise également l'intensité de réception précise.

6. Procédé selon l'une quelconque des revendications 1 à 5, **caractérisé en ce que** pour la détermination de trames on utilise des canaux radio broadcast.

7. Procédé selon l'une quelconque des revendications 1 à 6, **caractérisé en ce que** pour la détermination de trames on utilise les canaux radio (k1 - k6) d'un réseau de radio cellulaire et l'identification de la cellule de séjour du récepteur radio.

8. Procédé selon la revendication 6 et 7, **caractérisé en ce que** l'on utilise des canaux broadcast GSM.

9. Procédé selon l'une quelconque des revendications 1 à 8, **caractérisé en ce qu'**il est utilisé en complément d'autres procédés de détermination de position indépendants.

10. Procédé selon la revendication 9, **caractérisé en ce que** comme procédé de détermination de position indépendant on utilise un système de positionnement par satellite.

11. Procédé selon l'une quelconque des revendications 1 à 10, **caractérisé en ce qu'**une trame de canaux déterminée ainsi qu'une position déterminée indépendamment de celle-ci sont combinées l'une avec l'autre et stockées comme trame de référence.

12. Procédé selon les revendications 10 et 11, **caractérisé en ce que** la détermination de position indépendante est effectuée à l'aide d'un système de positionnement par satellite.

13. Procédé selon l'une quelconque des revendications 1 à 12, **caractérisé par** une utilisation en relation avec un système de péage.

14. Appareil mobile (OBE) conçu pour recevoir au moyen d'au moins un dispositif de réception radio (GSM) des signaux radio d'un nombre de dispositifs d'émission radio (PSE ; SE1 - SE6) stationnaires distribués qui émettent des signaux radio par une liaison point à multipoints sur au moins respectivement un canal radio parmi un nombre prédéfini de canaux radio (k1 - k6),
**caractérisé en ce qu'**il présente des moyens d'exploitation (GSM) pour déterminer des trames de canaux à partir des canaux radio (k1 - k6) reçus et au moins une mémoire (SPE) pour stocker des trames de canaux de référence, et des moyens d'exploitation (GSM) sont prévus qui sont conçus pour déterminer la position du dispositif de réception radio (GSM) par comparaison de l'au moins une trame de canaux déterminée avec des trames de référence.

15. Appareil selon la revendication 14, **caractérisé en ce que** le dispositif de réception radio (GSM) est conçu pour déterminer une trame de canaux à partir des canaux radio (k1 - k6) reçus.

16. Appareil selon la revendication 14, **caractérisé en ce qu'**il comprend des moyens d'exploitation et de stockage séparés du dispositif de réception radio (GSM), l'au moins une mémoire (SPE) et/ou le moyen d'exploitation étant directement associé au dispositif de réception radio (GSM).

17. Appareil selon l'une quelconque des revendications 14 à 16, **caractérisé en ce que** le dispositif de réception radio (GSM) est un dispositif d'émission et de réception de radio mobile.

18. Appareil selon la revendication 17, **caractérisé en ce que** le dispositif de réception radio (GSM) est un dispositif d'émission et de réception de radio mobile basé sur le standard GSM.

19. Appareil selon l'une quelconque des revendications 14 à 18, **caractérisé en ce qu'**en complément de la détermination de position on utilise un système de détermination de position indépendant.

20. Appareil selon la revendication 19, **caractérisé par** l'utilisation d'un système de positionnement indépendant par satellite.

21. Appareil selon l'une quelconque des revendications 14 à 20, **caractérisé par** une utilisation en relation avec un système de péage.
